# EUROPÄISCHE PATENTSCHRIFT

(11) **EP 2 288 500 B1**
(45) Veröffentlichungstag und Bekanntmachung des Hinweises auf die Patenterteilung: **03.04.2013**
(21) Anmeldenummer: 09738188.3
(22) Anmeldetag: 29.04.2009
(51) Int. Cl.: B32B 21/06, B32B 27/04, B32B 29/02, B32B 29/06, C09D 7/12, C09D 161/28, D21H 19/26

(54) **LAMINAT UND VERFAHREN ZU DESSEN HERSTELLUNG**
LAMINATE AND METHOD FOR THE PRODUCTION THEREOF
STRATIFIÉ ET SON PROCÉDÉ DE FABRICATION

(30) Priorität: 30.04.2008 DE 102008022341
(43) Veröffentlichungstag der Anmeldung: 02.03.2011
(73) Patentinhaber: Borealis Agrolinz Melamine GmbH, 4021 Linz (AT)
(72) Erfinder: ENDESFELDER, Andreas, A-4020 Linz (AT); PEREIRA, Elaine, A-4600 Wels (AT); BURGER, Martin, D-84032 Altdorf (DE); BINDER, Josef, A-3500 Krems (AT)
(74) Vertreter: Sokolowski, Fabian
(86) Internationale Anmeldenummer: PCT/EP2009/055209
(87) Internationale Veröffentlichungsnummer: WO 2009/133144

(56) Entgegenhaltungen:
- EP-A1- 0 329 154
- EP-A1- 1 584 666
- WO-A1-2004/035473
- US-A- 4 505 974

## Beschreibung

Die Erfindung betrifft ein Verfahren zur Herstellung eines Laminats nach dem Oberbegriff des Anspruchs 1, ein durch ein solches Verfahren herstellbares Laminat nach dem Oberbegriff des Anspruchs 13 sowie die Verwendung eines entsprechenden Laminats gemäß Anspruch 14.

Laminate sind seit langem für die Verwendung in der holzverarbeitenden Industrie bekannt. So werden sie beispielsweise für die Herstellung von Fußbodenbelägen, Wandverkleidungen oder Möbelplatten verwendet. Die Laminate weisen einen schichtweisen Aufbau auf, wobei die oberste Schicht meist aus einem mit einem Aminoplastharz imprägnierten Papier besteht. Dies kann sowohl ein Dekor- als auch ein Overlaypapier sein. Ein Dekorpapier ist ein Spezialpapier, das zur dekorativen Beschichtung von (Holz-)Werkstoffen dient. Es wird in bedruckter oder unbedruckter Form mit Kunstharzen durchtränkt bzw. imprägniert und anschließend auf das Trägermaterial laminiert bzw. kaschiert. Ein Overlaypapier dient dem Schutz der Oberfläche vor äußeren Einflüssen wie Kratzern, Schrammen oder Abrieb.

Die unteren Schichten oder Trägerschichten können sowohl aus weiteren mit verschiedenen Harzen imprägnierten Papieren oder auch aus kompakten Platten wie z.B. MDF- (medium density fiber, mitteldichte Faser) oder HDF- (high density fiber, hochdichte Faser) Platten bestehen.

Laminate besitzen sehr gute Eigenschaften hinsichtlich Lagerstabilität, Transparenz, Glanz oder auch Griffigkeit. Hinsichtlich der Kratzfestigkeit und vor allem der Mikrokratzfestigkeit besteht aber weiterer Verbesserungsbedarf vor allem für die Anwendungen im Fußboden und Möbelbereich.

Es ist allgemein bekannt, zur Erhöhung der Kratzfestigkeit kleine, harte Aluminiumoxidpartikel einzusetzen, die mit dem Overlaypapier aufgebracht werden. Allerdings geht dies meist mit einem Verlust an Glanz und Transparenz des Laminats einher. Außerdem besteht die Gefahr, dass durch die Partikel die zur Herstellung des Laminats eingesetzten Pressbleche beschädigt werden.

Die EP 0 329 154 A1 beschreibt die Verwendung von kleinen, trockenen und harten Partikeln, die auf das bereits imprägnierte Papier aufgebracht werden. Die Partikel haben eine Größe von 1 bis 80 µm. Die Verbesserung der Kratzfestigkeit geht allerdings einher mit einem verschlechterten Glanzverhalten des Laminats.

Die EP 0 136 577 A2 beschreibt die Verwendung von harten mineralischen Nanopartikeln, die in die oberste Schicht eines Laminats eingebracht werden. Werden zu wenige der Partikel eingebracht, ist kein ausreichender Effekt auf die Kratzfestigkeit zu beobachten. Werden allerdings höhere Mengen der Partikel eingebracht, kommt es rasch zu einem Grauschleier und zu einem Glanzverlust des Laminats.

Die EP 1 584 666 A1 beschreibt die Verwendung von besonders feinteiligen Füllstoffen, die dem Aminoplastharz zugesetzt werden, mit dem das Papier imprägniert wird. Laminate, die aus solchen Papieren hergestellt werden, weisen eine verbesserte Kratzfestigkeit auf, und es ist dennoch möglich, eine glänzende Oberfläche zu erzielen. Allerdings wird nur die Beständigkeit gegenüber großen tiefen Kratzer verbessert, für die Mikrokratzfestigkeit ist kaum ein Effekt zu beobachten. Außerdem kann es bei zu hohen Mengen an Füllstoff leicht zu einem Grauschleier kommen.

Die WO 03/040223 A2 beschreibt die gemeinsame Verwendung von Nanopartikeln und Mikropartikeln, um so die Kratzfestigkeit eines Laminats zu verbessern. Hier ist eine sehr feine Abstimmung der Mengen an Nanopartikeln und Mikropartikeln notwendig, um die gewünschten Eigenschaften zu erhalten. Außerdem ist das Verfahren sehr aufwendig.

Die US 2004/0116585 A1 beschreibt die Verwendung einer Mischung aus einem Aminoplastharz und aus Silika-Nanopartikeln als Additiv in Lacken. Ziel ist hier eine verbesserte Kratzfestigkeit. Allerdings sind keine Eigenschaften wie Glanz und Transparenz erwähnt, auch ist keine Anwendung in Laminaten aufgezeigt.

Aus der WO 2004/035473 A1 sind wässrige Lösungen silanisierter kolloidaler Silikadispersionen bekannt. Es wird die Verwendung von Epoxysilanen und von Epoxysilanen mit Glycidoxygruppen zur Silanisierung beschrieben.

Aufgabe der vorliegenden Erfindung ist es, ein Verfahren zur Herstellung eines Laminats bereitzustellen, welches eine gegenüber dem Stand der Technik verbesserte Stabilität gegenüber äußeren Einflüssen, insbesondere eine höhere Mikrokratzfestigkeit, aufweist, unter gleichzeitiger Beibehaltung der üblichen Qualitätsmerkmale von Laminaten, insbesondere unter Beibehaltung einer im Wesentlichen vollständigen Transparenz einer Aminoplastharzschicht und einer Erhaltung des hohen Glanzes des Laminats.

Diese Aufgabe wird mit einem Verfahren zur Herstellung eines Laminats mit den Merkmalen des Anspruchs 1 gelöst.

Bei einem derartigen Verfahren zur Herstellung eines Laminats wird eine oberste Schicht mit einer unteren Schicht und/oder einer Trägerschicht, insbesondere durch Verpressen unter erhöhtem Druck und erhöhter Temperatur, verbunden. Die oberste Schicht eines solchen Laminats weist erfindungsgemäß ein mit einem Aminoplastharz imprägniertes Papier und oberflächenmodifizierte Silika-Nanopartikel auf. Die oberflächenmodifizierten Silika-Nanopartikel weisen an ihrer Oberfläche mindestens ein Silan auf, das mindestens eine funktionelle Gruppe trägt.

Dabei ist es vorgesehen, dass die oberflächenmodifizierten Silika-Nanopartikel auf das bereits mit dem Aminoplastharz imprägnierte Papier aufgebracht werden. Dazu wird eine Dispersion bestehend aus den oberflächenmodifizierten Silika-Nanopartikeln und einem Dispersionsmittel auf das bereits mit dem Aminoplastharz imprägnierte Papier aufgebracht, insbesondere aufgesprüht. Als Dispersionsmittel für eine solche Dispersion wird mindestens eine Flüssigkeit aus der Gruppe bestehend aus Wasser, polaren Lösungsmitteln und Lösungen eines Modifizierungsmittels verwendet.

Das polare Lösungsmittel ist vorzugsweise Diethylenglykol, Monoethylenglykol, Butandiol, Butanol, Dipropylenglykolmethylether, Propylenglykolmethylether, Propylenglykolbutylether, Propylenglykolmethyletheracetat oder Isopropanol.

Bei den Lösungen eines Modifizierungsmittels handelt es sich insbesondere um wässrige Lösungen. Vorzugsweise werden als Modifizierungsmittel ein Netzmittel, ein Verdickungsmittel, ein Trennmittel und/oder ein Härter verwendet. Die Dispersion kann eine oder mehrere der zuvor genannten Substanzen in beliebiger Kombination enthalten.

Das bereits imprägnierte Papier kann beim Aufbringen der Silika-Nanopartikel noch feucht oder bereits vorgetrocknet oder auch vollständig getrocknet sein. Das Aufsprühen kann dabei durch dem Fachmann bekannte geeignet Apparaturen erfolgen.

Wie eingangs erwähnt, weist ein mit einem solchen Verfahren hergestelltes Laminat als oberste Schicht ein mit einem Aminoplastharz imprägniertes Papier und oberflächenmodifizierte SiO₂-Nanopartikel (Silika-Nanopartikel) auf. Die oberste Schicht des Laminats ist dabei die Schicht, die einem Benutzer des Laminats direkt zugewandt ist. Handelt es sich bei dem Laminat beispielsweise um einen Fußbodenbelag, ist die oberste Schicht die Schicht des Laminats, auf der sich ein Benutzer des Laminats bewegt. Handelt es sich bei dem Laminat beispielsweise um das Material eines Möbelstücks, ist die oberste Schicht die Schicht, die üblicherweise an sichtbaren Stellen des Möbelstücks einem Benutzer zugewandt ist (beispielsweise die Oberseite einer Tischplatte, die Seitenflächen eines Schrankes oder die Sitzfläche eines Stuhls). Insbesondere bei einem Möbelstück kann die oberste Seite des Laminats die verschiedensten Orientierungen im Raum aufweisen.

Wie ebenfalls bereits erwähnt, sind die SiO₂-Nanopartikel mit mindestens einem Silan oberflächenmodifiziert, welches mindestens eine funktionelle Gruppe trägt. Die funktionelle Gruppe bewirkt dabei eine bessere Verträglichkeit zwischen dem Aminoplastharz und den Si0₂-Nanopartikeln.

Das mit dem erfindungsgemäßen Verfahren hergestellte Laminat weist mindestens zwei übereinander angeordnete Schichten auf, nämlich eine oberste Schicht und mindestens eine untere Schicht und/oder eine Trägerschicht. Die jeweils benachbart zueinander angeordneten Schichten sind miteinander zumindest teilweise, insbesondere vollständig, verbunden.

Die Funktionalisierung der Silika-Nanopartikel erfolgt durch Silanisieren mit entsprechend funktionalisierten Silanen. Die Silane reagieren dabei mit den Silika-Nanopartikeln unter Ausbildung von kovalenten Siloxan-Bindungen (Si-O-Si). Somit werden mit dieser Methode mit einem funktionalisierten Silan oberflächenmodifizierte Silika-Nanopartikel erhalten.

Durch die Verwendung von funktionalisierten oberflächenmodifizierten Silika-Nanopartikeln kommt es zu einer deutlich verbesserten Verträglichkeit der Silika-Nanopartikel mit der Aminoplastharz-Matrix. Die funktionellen Gruppen bewirken eine verbesserte Verträglichkeit mit der Harzmatrix und können sogar teilweise oder auch vollständig mit der Harzmatrix reagieren und so eine kovalente Anknüpfung der Silika-Nanopartikel an die Harzmatrix bewirken. Aber auch wenn keine kovalente Anbindung erfolgt, werden die Silika-Nanopartikel über Wasserstoffbrücken und Van-der-Waals-Wechselwirkungen zwischen den funktionellen Gruppen der Silika-Nanopartikel und beispielsweise den Methylol- oder Methylether-Gruppen der Harzmatrix gebunden.

Durch diese Effekte erfolgt eine homogene Verteilung der Silika-Nanopartikel in der Harzmatrix und somit eine gleichmäßige Verteilung über die gesamte Fläche des imprägnierten Papiers und damit über die gesamte Fläche des daraus hergestellten Laminats. Von besonderem Vorteil ist dabei, dass an der Oberfläche, die den äußeren Einflüssen ausgesetzt ist, eine homogene und gleichmäßige Verteilung der Silika-Nanopartikel vorliegt. Es ist dabei im Besonderen zu beobachten, dass die Silika-Nanopartikel die Mikrorauhigkeit der Oberfläche ausgleichen, da sie sich bevorzugt in den "Tälern" der Oberfläche anordnen. All dies bewirkt eine deutlich verbesserte Widerstandsfähigkeit gegenüber leichten oberflächlichen Kratzern und mithin eine deutlich verbesserte Mikrokratzbeständigkeit im Vergleich zu den gängigen Laminaten.

Geeignete Silan-Verbindungen für die Modifizierungen sind unter anderem Silane, die eine Aminogruppe, eine Hydroxylgruppe, eine Epoxid-Gruppe, eine Glycidoxy-Gruppe und/oder eine Glycidoxypropyl-Gruppe enthalten. Beispiele hierfür sind gamma-Glycidoxypropyl-trimethoxysilan, gamma-Glycidoxypropyl-methyldiethoxysilan, (3-Glycidoxypropyl)trimethoxysilan, (3-Glycidoxypropyl)hexyltrimethoxy-silan, beta-(3,4-Epoxycyclohexyl)-ethyltriethoxysilan. Weitere geeignete Silane sowie die Herstellung der oberflächenmodifizierten Silika-Nanopartikel an sich sind in der EP 1 554 220 A1 (WO 2004/035473 A1) beschrieben.

Besonders bevorzugt sind Silika-Nanopartikel, die mit gamma-Glycidoxypropyl-trimethoxysilan und/oder gamma-Glycidoxypropyl-methyldiethoxysilan modifiziert wurden. Zweckmäßig werden kommerziell verfügbare Verbindungen verwendet, wie z. B. Bindzil CC30, CC40 oder CC15.

Die oberflächenmodifizierten Silika-Nanopartikel weisen in einer Variante einen mittleren Partikeldurchmesser von ca. 2 nm bis ca. 500 nm, insbesondere von ca. 3 nm bis ca. 200 nm und ganz besonders von ca. 5 nm bis ca. 60 nm auf.

Die oberflächenmodifizierten funktionalisierten Silika-Nanopartikel werden dabei in Mengen von ca. 5 % bis ca. 70 %, insbesondere ca. 10 % bis ca. 50 % und ganz besonders ca. 20 % bis ca. 30 %, jeweils bezogen auf die Menge an Aminoplastharz, eingesetzt. Die Prozentangeben sind hier wie auch im Folgenden stets als Massenprozent zu verstehen, sofern nicht explizit etwas anderes angegeben ist.

Neben den beschriebenen oberflächenmodifizierten Silika-Nanopartikeln können dem Aminoplastharz noch weitere Additive beigesetzt sein, wie z. B. Post-forming-Additive, Netzmittel, Härter, Trennmittel etc.

Als Aminoplastharze können dem Fachmann bekannte Harze verwendet werden, insbesondere Melamin-Formaldehydharze, Melamin-Harnstoff-Formaldehydharze, Harnstoff-Formaldehydharze oder beliebige Mischungen davon.

Diese Harze können in einer Variante durch Alkohole, vor allem C₁- bis C₄-Alkohole, bevorzugt Methanol und/oder Butanol, vollständig oder teilweise verethert sein. Unter dem Begriff Aminoplastharz im Sinne der Erfindung sind auch Mischungen von einem oder mehreren verschiedenen Harzen zu verstehen.

Als Papier der obersten Schicht des Laminats eignet sich ein Overlaypapier ebenso wie ein Dekorpapier. Diese an sich bekannten Papiere weisen derartige Eigenschaften auf, dass sie gut mit einem Aminoplastharz getränkt bzw. imprägniert werden können. Die Overlaypapiere besitzen vorteilhafterweise ein Flächengewicht von ca. 25 bis ca. 60 g/m², bevorzugt von ca. 25 bis ca. 50 g/m². Die Dekorpapiere besitzen vorteilhafterweise ein Flächengewicht von ca. 25 bis ca. 150 g/m², bevorzugt von ca. 40 bis ca. 100 g/m².

Ein geeignetes Trägermaterial für die die oberste Schicht des Laminats ist in einer Variante eine Trägerschicht, die ein mit Phenolharz imprägniertes Kraftpapier aufweist. Dabei kann die Trägerschicht ein einzelnes oder auch eine Lage von mehreren solchen imprägnierten Kraftpapieren aufweisen. Werden mehrere solcher Lagen mit einer obersten Schicht verpresst, erhält man so genannte Compact boards. Kraftpapier ist dem Fachmann allgemein als Papier hoher Festigkeit, insbesondere als Papier mit hoher Zugfestigkeit, bekannt.

Die Trägerschicht kann auch alternativ oder zusätzlich eine oder mehrere Lagen weiterer mit Aminoplastharz imprägnierter Dekorpapiere aufweisen.

Als Material für die Trägerschicht ferner geeignet sind gängige Holzwerkstoffplatten wie z. B. MDF-Platten, HDF-Platten, Spanplatten, OSB- (oriented strand board, Grobspan) Platten oder auch Vollholzplatten. Als Material für die Trägerschicht werden MDF- und HDF-Platten sowie ein oder mehrere Lagen Kraftpapier bevorzugt verwendet.

In einer Variante ist ein Gegenzug auf der Rückseite der Trägerschicht angeordnet. Der Gegenzug besteht vorteilhafterweise aus mit Aminoplastharz imprägniertem Natronkraftpapier oder einem anderen geeigneten Papier.

Zusätzlich ist es möglich, dass zwischen der Trägerschicht und der obersten Schicht eine weitere Schicht angeordnet ist, die als untere Schicht bezeichnet wird. Die oberste Schicht wäre dann mit der unteren Schicht verbunden und die untere Schicht mit der Trägerschicht. Mehrere untere Schichten sind ebenso denkbar.

Gegenstand der Erfindung ist ferner ein Laminat, das durch ein Verfahren gemäß den vorherigen Erläuterungen herstellbar ist.

Das erfindungsgemäße Laminat eignet sich zur Verwendung als Fußbodenbelag, Tischplatte oder allgemein in der Möbelherstellung zur Herstellung weiterer Möbel.

Die Erfindung wird anhand der nachstehenden Beispiele näher erläutert.

### Beispiel 1 (Stand der Technik)

In einem 2 l Rundkolben werden 350 g einer 37%igen Formaldehydlösung mit 120 g Wasser vermengt. Zu dieser Mischung werden 211 g einer 52%igen Silika-Nanopartikel-Dispersion gegeben und die erhaltene Mischung kräftig miteinander verrührt. Die Silika-Nanopartikel haben einen mittleren Durchmesser von 7 nm und sind durch Umsetzung mit gamma-Glycidoxypropyl-trimethoxysilan stabilisiert, so dass sie an der Oberfläche zahlreiche Epoxygruppen tragen. Die Strukturformel von gamma-Glycidoxypropyl-trimethoxysilan ist nachfolgend wiedergegeben:

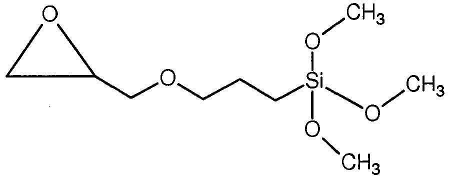

Zu dieser Mischung werden 310 g Melamin zugegeben und unter kräftigem Rühren rasch auf 93 °C erwärmt. Es wird darauf geachtet, dass der pH-Wert bei 8,8 ± 0,2 bleibt. Nötigenfalls wird der pH-Wert durch Zugabe von NaOH reguliert.

Die Reaktionsmischung wird weiter kondensiert, bis sich eine Wasserverträglichkeit von 2,3 eingestellt hat; dann wird auf Raumtemperatur abgekühlt. Man erhält eine klare und stabile Harzlösung.

### Beispiel 2 (Stand der Technik)

In einem 2 l Rundkolben werden 350 g einer 37%igen Formaldehydlösung mit 135 g Wasser vermengt. Zu dieser Mischung werden 310 g Melamin zugegeben und unter kräftigem Rühren rasch auf 93 °C erwärmt. Es wird darauf geachtet, dass der pH-Wert bei 8,8 ± 0,2 bleibt. Nötigenfalls wird der pH-Wert durch Zugabe von NaOH reguliert.

Die Reaktionsmischung wird weiter kondensiert, bis sich eine Wasserverträglichkeit von 2,3 eingestellt hat; dann wird auf Raumtemperatur abgekühlt.

Zu der abgekühlten Harzmischung werden 211 g einer 52%igen Silika-Nanopartikel-Dispersion gegeben und kräftig miteinander verrührt. Die Silika-Nanopartikel haben einen mittleren Durchmesser von 7 nm und sind durch Umsetzung mit gamma-Glycidoxypropyl-trimethoxysilan stabilisiert, so dass sie an der Oberfläche zahlreiche Epoxygruppen tragen. Man erhält eine klare und stabile Harzlösung.

### Vergleichsbeispiel 1

In einem 2 l Rundkolben werden 350 g einer 37%igen Formaldehydlösung mit 135 g Wasser vermengt. Zu dieser Mischung werden 310 g Melamin zugegeben und unter kräftigem Rühren rasch auf 93 °C erwärmt. Es wird darauf geachtet, dass der pH-Wert bei 8,8 ± 0,2 bleibt. Nötigenfalls wird der pH-Wert durch Zugabe von NaOH reguliert.

Die Reaktionsmischung wird weiter kondensiert, bis sich eine Wasserverträglichkeit von 2,3 eingestellt hat; dann wird auf Raumtemperatur abgekühlt.

Zu der abgekühlten Harzmischung werden 211 g einer 52%igen Silika-Nanopartikel-Dispersion gegeben und kräftig miteinander verrührt. Die Silika-Nanopartikel haben einen mittleren Durchmesser von 7 nm und sind nicht weiter modifiziert. Das heißt, sie tragen somit keine funktionellen Gruppen.

In diesem Fall wird eine trübe Lösung erhalten, aus der nach kurzer Zeit ein weißer Feststoff ausfällt.

### Beispiel 3 (Stand der Technik)

Es wird analog zu Beispiel 2 vorgegangen, nur dass als Silicapartikel solche Partikel verwendet werden, die mit beta-(3,4-Epoxycyclohexyl)-ethyltriethoxy-silan funktionalisiert wurden. Die Strukturformel von beta-(3,4-Epoxycyclohexyl)-ethyltriethoxy-silan ist nachfolgend wiedergegeben:

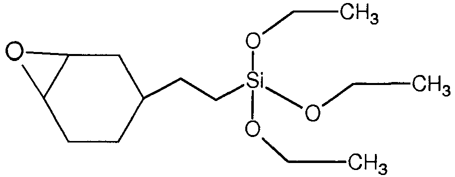

Man erhält ebenfalls eine stabile klare Lösung.

### Beispiel 4 (Stand der Technik)

Es wird analog zu Beispiel 2 vorgegangen, nur dass als Silicapartikel solche Partikel verwendet werden, die mit Aminopropyl-triethoxy-silan funktionalisiert wurden. Die Strukturformel von Aminopropyl-triethoxy-silan ist nachfolgend wiedergegeben:

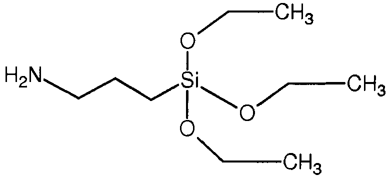

Man erhält ebenfalls eine stabile klare Lösung.

### Beispiel 5 (Stand der Technik)

Ein Dekorpapier (80 g/m²; Firma Technocell) wird mit dem Harz aus Beispiel 1 imprägniert, so dass ein Harzauftrag von 110% erzielt wird, wobei dem Harz kurz vor der Imprägnierung des Dekorpapiers 0,3 % Netzmittel (Hipe®add Nu04, AMI) und 0,5% Härter (Hipe®add A462, AMI) zugegeben wurden.

Das imprägnierte Dekorpapier wird zu einer Restfeuchte von 7% getrocknet. Anschließend wird das imprägnierte Dekorpapier zusammen mit drei Lagen eines phenolharzimprägnierten Kraftpapiers sowie einem Gegenzug mit einem Druck von 80 bar bei 150 °C für zwei Minuten verpresst und anschließend auf 70°C rückgekühlt.

### Beispiel 6 (Stand der Technik)

Es wird analog zu Beispiel 5 vorgegangen, als Harz wird allerdings das Harz aus Beispiel 2 verwendet.

### Beispiel 7 (Stand der Technik)

Es wird analog zu Beispiel 5 vorgegangen, als Harz wird allerdings das Harz aus Beispiel 3 verwendet.

### Beispiel 8 (Stand der Technik)

Es wird analog zu Beispiel 5 vorgegangen, als Harz wird allerdings das Harz aus Beispiel 4 verwendet.

### Vergleichsbeispiel 2

Es wird analog zu Beispiel 5 vorgegangen, als Harz wird allerdings ein Standard-Melamin-Formaldehyd-Harz (Standard-MF-Harz) verwendet. Die Herstellung eines solchen Harzes ist dem Fachmann bekannt. Sie erfolgt analog zu Beispiel 2, wobei allerdings auf die Zugabe von Silika-Nanopartikeln verzichtet wird.

### Beispiel 9 (Stand der Technik)

Ein Dekorpapier (80 g/m²; Firma Technocell) wird mit dem Harz aus Beispiel 2 imprägniert, so dass ein Harzauftrag von 110% erzielt wird, wobei dem Harz kurz vor der Imprägnierung 0,3 % Netzmittel (Hipe®add Nu04, AMI) und 0,5% Härter (Hipe®add A462, AMI) zugegeben wurden.

Das imprägnierte Dekorpapier wird zu einer Restfeuchte von 6% getrocknet. Anschließend wird das imprägnierte Papier mit einem Druck von 30 bar bei einer Temperatur von 180°C für 30 s auf eine MDF-Platte gepresst.

### Beispiel 10

Ein Dekorpapier (80 g/m²; Firma Technocell) wird mit einem Standard-MF-Harz (siehe Vergleichsbeispiel 2) imprägniert, so dass ein Harzauftrag von 110% erzielt wird. Das imprägnierte Dekorpapier wird zu einer Restfeuchte von 7% getrocknet.

Das getrocknete Papier wird mit einer wässrigen Dispersion von Silika-Nanopartikeln, wie sie in Beispiel 1 verwendet wurden, besprüht, so dass ein Auftrag von 20 g/m² an Silika-Nanopartikeln erzielt wird. Anschließend wird das Dekorpapier analog zu Beispiel 5 verpresst.

Die Mikrokratzfestigkeit der erhaltenen Laminate der Beispiele 5 bis 10 und des Vergleichsbeispiels 2 wurde mit Hilfe eines Taber Abraser getestet. Zu diesem Zweck wurden eine Rotationsgeschwindigkeit von 60 U/min bei einer Andruckkraft von 500 g unter Verwendung eines S33-Schleifpapiers gewählt und zwei Rotationszyklen (720° Rotation der Schleifscheibe des Taber Abraser) durchgeführt. Anschließend wurde die Oberfläche visuell bewertet und in folgende Klassen eingestuft:
1: keine sichtbare Veränderung der Oberfläche
2: schwach sichtbare feine Kratzer
3: sichtbare feine Kratzer
4: sichtbare tiefe Kratzer
5: sehr tiefe Kratzer

Daneben erfolgte eine Messung der Glanzunterschiede vor und nach dem Kratztest. Die Glanzmessung erfolgte mit einem TRI Gloss Master (Sheen Instruments GB). Hierbei wird die Menge an reflektiertem Licht einer zu untersuchenden Probe im Vergleich zu einer schwarzen Standardprobe gemessen. Die von der Standardprobe reflektierte Lichtmenge entspricht dabei 100 Einheiten. Zur Glanzmessungen wurde das Licht in einem Winkel von 60° zur Senkrechten auf die Probe eingestrahlt und das in diesem Winkel reflektierte Licht gemessen.

Die Ergebnisse der Bestimmung der Kratzfestigkeit und der Glanzunterschiede der verschiedenen Laminate können der folgenden Tabelle 1 entnommen werden.

**Tabelle 1: Bestimmung der Kratzfestigkeit und der Glanzunterschiede der verschiedenen Laminate.**

| **Laminat aus** | **visuelle Bewertung** | **Glanzverlust [%]** |
|---|---|---|
| Beispiel 5 | 2 | 13,0 |
| Beispiel 6 | 2-3 | 16,8 |
| Beispiel 7 | 2-3 | 15,4 |
| Beispiel 8 | 1-2 | 11,8 |
| Beispiel 9 | 2-3 | 16,4 |
| Beispiel 10 | 1-2 | 12,3 |
| Vergleichsbeispiel 2 | 3-4 | 35,3 |

## Patentansprüche

1. Verfahren zur Herstellung eines Laminats, dessen oberste Schicht ein mit einem Aminoplastharz imprägniertes Papier und oberflächenmodifizierte Silika-Nanopartikel aufweist, wobei die oberflächenmodifizierten Silika-Nanopartikel an ihrer Oberfläche mindestens ein Silan aufweisen, welches mindestens eine funktionelle Gruppe trägt, wobei die oberste Schicht mit einer unteren Schicht und/oder einer Trägerschicht verbunden wird, **dadurch gekennzeichnet, dass** zur Bildung der obersten Schicht des Laminats eine Dispersion bestehend aus oberflächenmodifizierten Silika-Nanopartikeln und einem Dispersionsmittel auf ein bereits mit einem Aminoplastharz imprägniertes Papier aufgebracht wird, wobei als Dispersionsmittel mindestens eine der Flüssigkeiten aus der Gruppe bestehend aus Wasser, polaren Lösungsmitteln und Lösungen eines Modifizierungsmittels verwendet wird.

2. Verfahren nach Anspruch 1, **dadurch gekennzeichnet, dass** das polare Lösungsmittel Diethylenglykol, Monoethylenglykol, Butandiol, Butanol, Dipropylenglykolmethylether, Propylenglykolmethylether, Propylenglykolbutylether, Propylenglykolmethyletheracetat oder Isopropanol ist.

3. Verfahren nach Anspruch 1 oder 2, **dadurch gekennzeichnet, dass** das Modifizierungsmittel ein Netzmittel, Verdickungsmittel, Trennmittel und/oder Härter ist.

4. Verfahren nach einem der vorhergehenden Ansprüche, **dadurch gekennzeichnet, dass** die funktionelle Gruppe ausgewählt ist aus der Klasse umfassend Amino-, Hydroxy-, Epoxid-, Glycidoxy- und Glycidoxypropyl-Gruppen.

5. Verfahren nach einem der vorhergehenden Ansprüche, **dadurch gekennzeichnet, dass** die oberflächenmodifizierten Silika-Nanopartikel einen mittleren Durchmesser von 2 nm bis 500 nm, insbesondere von 3 nm bis 200 nm und ganz besonders von 5 nm bis 60 nm aufweisen.

6. Verfahren nach einem der vorhergehenden Ansprüche, **dadurch gekennzeichnet, dass** die oberste Schicht die oberflächenmodifizierten Silika-Nanopartikel in einer Menge von 5 % bis 70 %, insbesondere von 10 % bis 50 % und ganz besonders von 20 % bis 30 %, bezogen auf die Menge des Aminoplastharzes, aufweist.

7. Verfahren nach einem der vorhergehenden Ansprüche, **dadurch gekennzeichnet, dass** als Aminoplastharz ein Melamin-Formaldehyd-Harz, ein Melamin-Harnstoff-Harz, ein Harnstoff-Formaldehyd-Harz oder eine beliebige Mischung davon eingesetzt wird.

8. Verfahren nach Anspruch 7, **dadurch gekennzeichnet, dass** das Aminoplastharz vollständig oder teilweise mit mindestens einem Alkohol verethert ist.

9. Verfahren nach Anspruch 8, **dadurch gekennzeichnet, dass** der für die Veretherung eingesetzte Alkohol ein C₁-C₄ Alkohol, insbesondere Methanol und/oder Butanol, ist.

10. Verfahren nach einem der vorhergehenden Ansprüche, **dadurch gekennzeichnet, dass** das Papier ein Overlaypapier oder ein Dekorpapier ist.

11. Verfahren nach einem der vorhergehenden Ansprüche, **dadurch gekennzeichnet, dass** das Laminat eine Trägerschicht aufweist, die eine oder mehrere Lagen von mit Phenolharz imprägniertem Kraftpapier aufweist.

12. Verfahren nach einem vorhergehenden Ansprüche, **dadurch gekennzeichnet, dass** das Laminat eine Trägerschicht aufweist, die eine MDF-, HDF-, OSB-, Span- oder Vollholz-Platte aufweist.

13. Laminat, herstellbar nach einem der Ansprüche 1 bis 12.

14. Verwendung eines Laminats nach Anspruch 13 als Fußbodenbelag, Tischplatte oder in der Möbelherstellung.

## Claims

1. Method for producing a laminate, the top layer thereof comprising a paper impregnated with an aminoplast resin and surface modified silica nano particles, wherein the surface modified silica nano particles comprise on the surface thereof at least one silane, which carries at least one functional group, wherein the top layer is connected to a lower layer and/or a supporting layer, **characterized in that** for forming the top layer of the laminate a dispersion consisting of surface modified silica nano particles and a dispersion agent is applied on a paper already being impregnated with a first aminoplast resin, wherein at least one of the liquids of a group consisting of water, polar solvent and solutions of a modifying agent are used as dispersion agent.

2. Method according to claim 1, **characterized in that** the polar solvent is diethylene glycol, monoethylene glycol, butanediol, butanol, dipropylene glycol methyl ether, propylene glycol methylether, propylene glycol butylether, propylene glycol methyletheracetate or isopropanol.

3. Method according to claim 1 or 2, **characterized in that** the modifying agent is a wetting agent, thickening agent, separating agent and/or hardener.

4. Method according to one of the preceding claims, **characterized in that** the functional group is selected from the class comprising amino, hydroxyl, epoxide, glycidoxy and glycidoxypropyl groups.

5. Method according to one of the preceding claims, **characterized in that** the surface modified silica nano particles have an average diameter of 2 nm to 500 nm, in particular of 3 nm to 200 nm and specifically in particular of 5 nm to 60 nm.

6. Method according to one of the preceding claims, **characterized in that** the top layer comprises the surface modified silica nano particles in an amount of 5 % to 7 %, in particular of 10 % to 50 % and specifically in particular of 20 % to 30 % in respect to the amount of aminoplast resin.

7. Method according to one of the preceding claims, **characterized in that** a melamine formaldehyde resin, a melamine urea resin, a urea formaldehyde resin or a mixture thereof is used as aminoplast resin.

8. Method according to claim 7, **characterized in that** the aminoplast resin is completely or partially etherified with at least one alcohol.

9. Method according to claim 8, **characterized in that** the alcohol used for the etherification is a C₁ - C₄ alcohol, in particular methanol and/or butanol.

10. Method according to one of the preceding claims, **characterized in that** the paper is an overlay paper or a decor paper.

11. Method according to one of the preceding claims, **characterized in that** the laminate comprises a support layer, which comprises one or multiple layers of kraft paper impregnated with phenol resin.

12. Method according to one of the preceding claims, **characterized in that** the laminate comprises a supporting layer, which comprises a MDF-, HDF-, OSB-, chip- or solid-wood-board.

13. Laminate obtainable according to one of the claims 1 to 12.

14. Use of a laminate according to claim 13 as floor covering, table top or in the production of furniture.

## Revendications

1. Procédé de fabrication d'un stratifié, dont la couche supérieure présente un papier imprégné d'une résine aminoplaste et des nanoparticules de silice à surface modifiée, dans lequel les nanoparticules de silice à surface modifiée présentent au niveau de leur surface au moins un silane, qui comporte au moins un groupe fonctionnel, et dans lequel la couche supérieure est reliée à une couche inférieure et/ou à une couche de support, **caractérisé en ce qu'**aux fins de la formation de la couche supérieure du stratifié, une dispersion constituée de nanoparticules de silice à surface modifiée et d'un agent de dispersion est appliquée sur un papier déjà imprégné d'une résine aminoplaste, et **en ce qu'**on utilise comme agent de dispersion au moins un des liquides choisis dans le groupe constitué d'eau, de solvants polaires et de solutions d'un agent de modification.

2. Procédé selon la revendication 1, **caractérisé en ce que** le solvant polaire est du diéthylène glycol, du monoéthylène glycol, du butanediol, du butanol, de l'éther méthylique de dipropylène glycol, de l'éther méthylique de propylène glycol, de l'éther butylique de propylène glycol, de l'acétate d'éther méthylique de propylène glycol ou de l'isopropanol.

3. Procédé selon la revendication 1 ou 2, **caractérisé en ce que** l'agent de modification est un agent mouillant, un agent épaississant, un agent séparateur et/ou un durcisseur.

4. Procédé selon l'une quelconque des revendications précédentes, **caractérisé en ce que** le groupe fonctionnel est choisi dans la classe comportant les groupes amino, hydroxy, epoxy, glycidoxy et glycidoxypropyle.

5. Procédé selon l'une quelconque des revendications précédentes, **caractérisé en ce que** les nanoparticules de silice à surface modifiée présentent un diamètre moyen allant de 2 nm à 500 nm, allant en particulier de 3 nm à 200 nm et tout particulièrement allant de 5 nm à 60 nm.

6. Procédé selon l'une quelconque des revendications précédentes, **caractérisé en ce que** la couche supérieure présente les nanoparticules de silice à surface modifiée en une quantité allant de 5 % à 70 %, en particulier de 10 % à 50 % et tout particulièrement de 20 % à 30 %, rapportée à la quantité de la résine aminoplaste.

7. Procédé selon l'une quelconque des revendications précédentes, **caractérisé en ce qu'**on utilise comme résine aminoplaste une résine de mélamine-formaldéhyde, une résine de mélamine-urée, une résine d'urée-formaldéhyde ou un mélange quelconque de ces dernières.

8. Procédé selon la revendication 7, **caractérisé en ce que** la résine aminoplaste est éthérifiée entièrement ou partiellement avec au moins un alcool.

9. Procédé selon la revendication 8, **caractérisé en ce que** l'alcool utilisé pour l'éthérification est un alcool en C₁-C₄, en particulier du méthanol et/ou du butanol.

10. Procédé selon l'une quelconque des revendications précédentes, **caractérisé en ce que** le papier est un papier de revêtement ou un papier décoratif.

11. Procédé selon l'une quelconque des revendications précédentes, **caractérisé en ce que** le stratifié présente une couche de support, qui présente une ou plusieurs couches de papier kraft imprégné de résine phénolique.

12. Procédé selon l'une quelconque des revendications précédentes, **caractérisé en ce que** le stratifié présente une couche de support, qui présente un panneau MDF (panneau de fibres à densité moyenne), un panneau HDF (panneau de fibres à haute densité), un panneau OSB (panneau de particules orientées), un panneau de particules de bois ou un panneau en bois massif.

13. Stratifié, pouvant être fabriqué selon l'une quelconque des revendications 1 à 12.

14. Utilisation d'un stratifié selon la revendication 13 en tant que revêtement de sol, en tant que plateau de table ou dans la fabrication de meubles.
